# EUROPÄISCHE PATENTSCHRIFT

(11) **EP 4 463 649 B1**
(45) Veröffentlichungstag und Bekanntmachung des Hinweises auf die Patenterteilung: **25.03.2026**
(21) Anmeldenummer: 23704226.2
(22) Anmeldetag: 10.01.2023
(51) Int. Cl.: F16L 37/088, F16L 37/14

(54) **STECKERBAUGRUPPE MIT EINEM STECKVERBINDER UND EINEM GEGENSTECKVERBINDER**
PLUG ASSEMBLY COMPRISING A PLUG CONNECTOR AND A MATING PLUG CONNECTOR
ENSEMBLE BOUCHON COMPRENANT UN RACCORD ENFICHABLE ET UN RACCORD ENFICHABLE HOMOLOGUE

(30) Priorität: 11.01.2022 AT 500052022
(43) Veröffentlichungstag der Anmeldung: 20.11.2024
(73) Patentinhaber: Henn GmbH & Co KG., 6850 Dornbirn (AT)
(72) Erfinder: HOHLFELD, Sven, 6710 Nenzing (AT); SCHNEIDER, Pascal, 6850 Dornbirn (AT)
(74) Vertreter: Burger, Hannes Alfred
(86) Internationale Anmeldenummer: PCT/AT2023/060002
(87) Internationale Veröffentlichungsnummer: WO 2023/133604

(56) Entgegenhaltungen:
- US-A- 5 829 792
- US-A1- 2020 355 308

## Beschreibung

Die Erfindung betrifft eine Steckerbaugruppe mit einem Steckverbinder und einem Gegensteckverbinder zum Verbinden und Sichern von Leitungen für flüssige oder gasförmige Medien.

Aus der WO 2018/144902 A1, der WO 2018/102213 A1 und der EP 3 179 148 A1 sind diverse Steckerbaugruppen bekannt. Die aus diesen Dokumenten bekannten Steckerbaugruppen weisen den Nachteil auf, dass nicht eindeutig festzustellen ist, ob die Steckerbaugruppe richtig miteinander gefügt ist, bzw. ob der Gegenstecker und der Steckverbinder vollständig miteinander gefügt sind. Weitere gattungsgemäße Vorrichtungen wurden auch noch aus US 5 829 792 A und US 2020 355 308 A1 bekannt.

Aufgabe der vorliegenden Erfindung war es, die Nachteile des Standes der Technik zu überwinden und eine Steckerbaugruppe zur Verfügung zu stellen, welche die Kontrollierbarkeit der korrekten Verbindung verbessern.

Diese Aufgabe wird durch eine Vorrichtung und ein Verfahren gemäß den Ansprüchen gelöst.

Die Erfindung betrifft eine Steckerbaugruppe zum Verbinden von Leitungen für flüssige oder gasförmige Medien. Die Steckerbaugruppe umfasst
- einen ersten Steckverbinder mit einem Aufnahmeraum in einem ersten Mantel-abschnitt;
- einen Gegensteckverbinder, der Gegensteckverbinder umfassend ein Verbindungsrohr mit einem ersten Verbindungsabschnitt, wobei der erste Verbindungs-abschnitt im gesteckten Zustand der Steckerbaugruppe im Aufnahmeraum des ersten Steckverbinders aufgenommen ist. Der Gegensteckverbinder umfasst ein erstes Anzeigeelement mit einer Positionsmarkierung und ein zweites Anzeigeelement mit einer Lagemarkierung, wobei das erste Anzeigeelement in Axialrichtung entlang einer Mittelachse der Steckerbaugruppe zwischen einer Ruhestellung und einer Anzeigestellung verlagerbar ist,
- wobei in der Anzeigestellung des ersten Anzeigeelementes die Positionsmarkierung und die Lagemarkierung ein sich ergänzendes bzw. korrespondierendes Erscheinungsbild ausbilden, wobei das erste Anzeigeelement im gesteckten Zu-stand der Steckerbaugruppe vom ersten Steckverbinder in seine Anzeigestellung gedrängt ist
   oder wobei in der Anzeigestellung des ersten Anzeigeelementes und gleich-zeitigem Positionieren des zweiten Anzeigeelementes in einer Anzeigestellung, die Positionsmarkierung und die Lagemarkierung ein sich ergänzendes bzw. korrespondierendes Erscheinungsbild ausbilden, wobei das erste Anzeigeelement im gesteckten Zustand der Steckerbaugruppe vom ersten Steckverbinder in seine Anzeigestellung gedrängt ist. Darüber hinaus ist vorgesehen, dass die Positionsmarkierung an einer ersten Umfangsfläche des ersten Anzeigeelements umlaufend ausgebildet ist und von Ausnehmungen unterbrochen ist, und dass die Lagemarkierung an einer zweiten Umfangsfläche des zweiten Anzeigeelements umlaufend ausgebildet ist und von Ausnehmungen unterbrochen ist, wobei in der Anzeigestellung des ersten Steckverbinders die Positionsmarkierung und die Lagemarkierung ein umlaufendes sich ergänzendes bzw. korrespondierendes Erscheinungsbild ausbilden. Dabei ist von Vorteil, dass die Lagemarkierung bzw. die Positionsmarkierung und in der Anzeigestellung des ersten Anzeigeelements das korrespondierende Erscheinungsbild am gesamten Umfang des Gegensteckverbinders erkennbar ist. Damit ist die Einsehbarkeit verbessert, was wiederum die Sicherheit der Steckerbaugruppe in der Verwendung derselben verbessert.

Die erfindungsgemäße Steckerbaugruppe bringt den Vorteil, dass durch die erfindungsgemäße Ausbildung des ersten Anzeigeelements in Kombination mit dem zweiten Anzeigeelement eindeutig erkennbar gemacht werden kann, ob die Steckerbaugruppe korrekt zusammengefügt ist und ob die Steckerbaugruppe korrekt geschlossen ist.

Des Weiteren kann es zweckmäßig sein, wenn der Gegensteckverbinder ein Federelement umfasst, wobei das erste Anzeigeelement mittels des Federelementes in Richtung der Ruhestellung gedrängt ist. Von Vorteil ist dabei, dass die Sicherheit der Steckerbaugruppe verbessert ist, da die Steckerbaugruppe korrekt zusammengesteckt sein muss damit das erste Anzeigeelement in der Anzeigestellung ist. Wäre die Steckerbaugruppe nicht korrekt zusammengebaut, würde das Anzeigeelement nicht oder zumindest nicht vollständig in die Anzeigeposition verlagert sein, da das Federelement das Anzeigeelement in Richtung der Ruhestellung drängt.

Ferner kann vorgesehen sein, dass am Gegensteckverbinder ein Ringraum ausgebildet ist, wobei der Ringraum radial innenliegend von einer Mantelfläche des Verbindungsrohres begrenzt wird und radial außenliegend von einer ersten Innenumfangsfläche des ersten Anzeigeelements und von einer zweiten Innenumfangsfläche des zweiten Anzeigeelements begrenzt wird, wobei in dem Ringraum das Federelement positioniert ist, mittels welchem das erste Anzeigeelement und das zweite Anzeigeelement in Axialrichtung entlang der Mittelachse voneinander distanziert sind. Das Federelement kann an der Mantelfläche des Verbindungsrohres anliegen und ebenso an den Innenumfangsflächen anliegen. Jedenfalls ist es von Vorteil, wenn das Federelement von den Anzeigeelementen umgriffen bzw. umfasst wird, wodurch die Anzeigeelemente lagestabil axial entlang der Mittelachse führbar sind und zudem die Stabilität des gesamten Gegensteckverbinders verbessert ist.

Darüber hinaus kann vorgesehen sein, dass der Gegensteckverbinder eine erste Sicherungsnut im Verbindungsrohr aufweist, und dass der Steckverbinder ein Arretierungselement umfasst und im ersten Mantelabschnitt zwei Durchtrittsöffnungen ausgebildet sind, wobei das Arretierungselement zum Sichern des ersten Steckverbinders relativ zum Gegensteckverbinder mit der zumindest einen ersten Sicherungsnut vorgesehen ist, wobei die Durchtrittsöffnungen zur Aufnahme des Arretierungselements ausgebildet sind, und wobei das Arretierungselement zwischen einer Arretierposition und einer Einsteckposition verlagerbar ist, wobei in einer Schließposition des ersten Steckverbinders der erste Verbindungsabschnitt im Aufnahmeraum positioniert ist und das Arretierungselement in die Arretierposition verlagert ist. Vorteilhaft ist dabei, dass die Lage des ersten Steckverbinders in der Schließposition gegenüber dem Gegensteckverbinder axial in Richtung der Mittelachse vollständig fixiert ist. Dadurch ergibt sich, dass eine fixierte Position des ersten Anzeigeelements in der Anzeigeposition vorherrschend ist. Somit ist die Erkennung einer falschen Positionierung eines Bauteils der Steckerbaugruppe für einen Benutzer der Steckerbaugruppe vereinfacht, wodurch die Sicherheit der Steckerbaugruppe verbessert ist.

Vorteilhaft ist auch eine Ausprägung, gemäß welcher vorgesehen sein kann, dass der erste Steckverbinder eine stirnseitige Wandung aufweist, wobei mittels der stirnseitigen Wandung das erste Anzeigeelement in Axialrichtung entlang der Mittelachse in die Anzeigestellung verlagert ist, wenn der erste Steckverbinder in der Schließposition ist, wobei die stirnseitige Wandung am ersten Anzeigeelement anliegt. Dadurch ergibt sich der Vorteil, dass das erste Anzeigeelement im Berührungsbereich mit dem ersten Steckverbinder, und der erste Steckverbinder im Berührungsbereich mit dem ersten Anzeigeelement jeweils annähernd gleiche Flächeninhalte aufweisen. Somit kann eine gleichmäßige Kraftübertragung über die Berührungsflächen bei der Positionierung des ersten Anzeigeelements in die Anzeigestellung erreicht werden. Damit wird verhindert, dass ein Bauteil der Steckerbaugruppe übermäßig beansprucht wird, was die Sicherheit der Steckerbaugruppe verbessert, da Beschädigungen vermieden werden können.

Gemäß einer Weiterbildung ist es möglich, dass das erste Anzeigeelement und das zweite Anzeigeelement als abschnittsweise formkomplementäre Klauen-Kupplungshälften ausgebildet sind, wobei das erste Anzeigeelement über seinen Umfang verteilte Klauen aufweist, welche in einem Abstand zueinander angeordnet sind, wobei zwischen den Klauen Ausnehmungen ausgebildet sind, wobei das erste Anzeigeelement und das zweite Anzeigeelement teilweise ineinandergreifend ausgebildet sind, wenn das erste Anzeigeelement in der Ruhestellung positioniert ist. Es ist dabei von Vorteil, dass zum einen die Stabilität der Steckerbaugruppe verbessert ist und dass die Handhabung vereinfacht ist, da die Anzeigeelemente bereits teilweise im gegenseitigen Eingriff sind und zum Überführen des ersten Anzeigeelements in die Anzeigestellung eine Linearbewegung in Axialrichtung entlang der Mittelachse ausreicht.

Es kann weiters vorteilhaft sein, wenn eine Klaue des ersten Anzeigeelements eine Ausnehmung bzw. eine Aussparung oder ein Fenster aufweist, wobei durch die Aussparung nur in der Anzeigestellung eine maschinenlesbare Codierung sichtbar ist.

Weiters kann vorgesehen sein, dass am Gegensteckverbinder eine Codierung ausgebildet ist und dass das erste Anzeigeelement derart ausgebildet ist, dass bei einem in der Anzeigestellung befindlichen ersten Anzeigeelement die Codierung von außen sichtbar ist und dass bei einem in der Ruhestellung befindlichen ersten Anzeigeelement die Codierung durch das erste Anzeigeelement verdeckt ist.

Ferner kann es vorteilhaft sein, wenn das erste Anzeigeelement und das zweite Anzeigeelement vollständig ineinandergreifend ausgebildet sind, wenn das erste Anzeigeelement in der Anzeigestellung positioniert ist. Vorteilhaft ist dabei, dass die gesamte Steckerbaugruppe eine überwiegend geschlossene Oberfläche aufweist, was die Stabilität und die Sicherheit der Steckerbaugruppe erhöht, da das Eindringen von Verschmutzungen verhindert wird und andere schädliche Einflüsse abgewiesen werden können.

Gemäß einer Weiterbildung kann es vorteilhaft sein, wenn jeweils ein Teilabschnitt des ersten Anzeigeelements und ein Teilabschnitt des zweiten Anzeigeelements das Verbindungsrohr umfassend ausgebildet ist. Damit ist die Stabilität des Gegensteckverbinders und die Führung der Anzeigeelemente in Axialrichtung entlang der Mittelachse verbessert.

Ferner kann es zweckmäßig sein, wenn das korrespondierende Erscheinungsbild eine maschinenlesbare Codierung ist, wobei die maschinenlesbare Codierung nur auslesbar ist, wenn das erste Anzeigeelement in die Anzeigeposition verlagert ist.

Weiters kann es vorteilhaft sein, wenn die maschinenlesbare Codierung ein QR-Code, ein Strichcode, ein 3D-Code oder ein anderer maschinenlesbarer Code ist. In jedem Fall ist diese Weiterbildung vorteilhaft, da die maschinenlesbare Codierung nur maschinell ausgelesen werden kann, wenn die Positionsmarkierung und die Lagemarkierung das vollständige korrespondierende Erscheinungsbild ausbilden. Es ist denkbar, dass die maschinenlesbare Codierung nach dem Zusammensteckern der Steckerbaugruppe ausgelesen wird und dass somit der korrekte Zusammenbau der Steckergruppe, gegebenenfalls mit Zusatzinformationen zu den Einzelbauteilen der Steckerbaugruppe, in einer Datenbank vermerkt wird. Somit ist die korrekte Verwendung und Handhabung der Steckerbaugruppe nachvollziehbar und in weiterer Folge ist die Sicherheit in der Verwendung der Steckerbaugruppe verbessert.

Des Weiteren kann vorgesehen sein, dass das erste Anzeigeelement ein radial innenliegendes erstes Anschlagelement aufweist, und dass das Verbindungsrohr ein radial außenliegendes erstes Gegenanschlagelement aufweist, wobei die axiale Bewegungsfreiheit des ersten Anzeigeelements mittels des ersten Anschlagelementes begrenzt ist, wobei in der Ruhestellung des ersten Anzeigeelementes das erste Anschlagelement am ersten Gegenanschlagelement anliegt. Damit ergibt sich der Vorteil, dass das Anzeigeelement formschlüssig am Verbindungsrohr positioniert ist. Das erste Anschlagelement kann nicht verloren gehen und eine Verwendung der Steckerbaugruppe ohne alle zu verwendenden Bauteile ist wird verhindert.

Gemäß einer besonderen Ausprägung ist es möglich, dass das erste Anschlagelement auf der dem ersten Verbindungsabschnitt abgewandten Seite eine erste Schrägfläche aufweist. Vorteilhaft ist dabei, dass der Zusammenbau des Gegensteckverbinders vereinfacht ist, weil das erste Anzeigeelement in vereinfachter Weise über das Gegenanschlagelement des Verbindungsrohres geführt werden kann.

Entsprechend einer vorteilhaften Weiterbildung kann vorgesehen sein, dass das erste Anschlagelement eine radial innenliegende erste Gleitfläche aufweist, wobei das erste Anzeigeelement mittels der ersten Gleitfläche axial verschiebbar auf einer Umfangsfläche des Verbindungsrohres gelagert ist. Von Vorteil ist dabei, dass das erste Anzeigeelement am Verbindungsrohr gelagert ist, wodurch eine stabile Positionierung des ersten Anzeigeelements am Verbindungsrohr erreicht wird.

Insbesondere kann es vorteilhaft sein, wenn die Steckerbaugruppe einen zweiten Steckverbinder umfasst, welcher zweite Steckverbinder baugleich zum ersten Steckverbinder ausgebildet ist, wobei das zweite Anzeigeelement in Axialrichtung entlang einer Mittelachse der Steckerbaugruppe zwischen einer Ruhestellung und einer Anzeigestellung verlagerbar ist, wobei in der Anzeigestellung des ersten Anzeigeelements die Positionsmarkierung und die Lagemarkierung ein sich ergänzendes bzw. korrespondierendes Erscheinungsbild ausbilden, wobei das erste Anzeigeelement und das zweite Anzeigeelement im gesteckten Zustand der Steckerbaugruppe vom ersten Steckverbinder in seine Anzeigestellung gedrängt sind. Dabei ist von Vorteil, dass die Steckerbaugruppe beidseitig verwendet werden kann, wobei für die Verbindung mit dem ersten Steckverbinder gleichermaßen wie für die Verbindung mit dem zweiten Steckverbinder das korrekte Zusammenstecken der Steckerbaugruppe für einen Bediener der Steckerbaugruppe in einfacher Weise erkennbar ist.

Es kann dabei zweckmäßig sein, wenn das zweite Anzeigeelement baugleich zum ersten Anzeigeelement ist und wenn das Verbindungsrohr des Gegensteckverbinders symmetrisch zu einer Mittelebene ist. Es sei angemerkt, dass in diesem Fall alle vorhergehend genannten Merkmale es ersten Anzeigeelements auf das zweite Anzeigeelement zutreffen können. Gleichermaßen können vorhergehend beschriebenen Merkmale der dem ersten Steckverbinder zugewandten Seite des Gegensteckverbinders auf dessen dem zweiten Steckverbinder zugewandte Seite zutreffen.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer ersten möglichen Ausgestaltungsform der Steckerbaugruppe im Öffnungszustand;
- Fig. 2: die Steckerbaugruppe in einer Schnittdarstellung entlang einer Schnittlinie, welche Schnittlinie Fig. 1 entnommen werden kann;
- Fig. 3: eine perspektivische Ansicht der Steckerbaugruppe im Schließzustand;
- Fig. 4: eine perspektivische Ansicht einer zweiten mögliche Ausgestaltungsform der Steckerbaugruppe im Öffnungszustand;
- Fig. 5: die zweite mögliche Ausgestaltungsform der Steckerbaugruppe im Schließzustand.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Weiters sei festgehalten, dass entsprechend der Bezugszeichenliste Begriffe aus der Bezugszeichenliste mit und/oder ohne bestimmten Index in der Beschreibung der Offenbarung verwendet werden. Sofern eine genaue Differenzierung der Be-griffe hinsichtlich deren spezifischer Ausgestaltungsform nicht notwendig ist, werden keine Indizes verwendet. Im Umkehrschluss kann beispielsweise eine Durchtrittsöffnung 25a von einer Durchtrittsöffnung 25b entsprechend der jeweiligen Beschreibung unterschieden werden, wobei beides weiterhin jeweils eine Durchtrittsöffnung 25 ist.

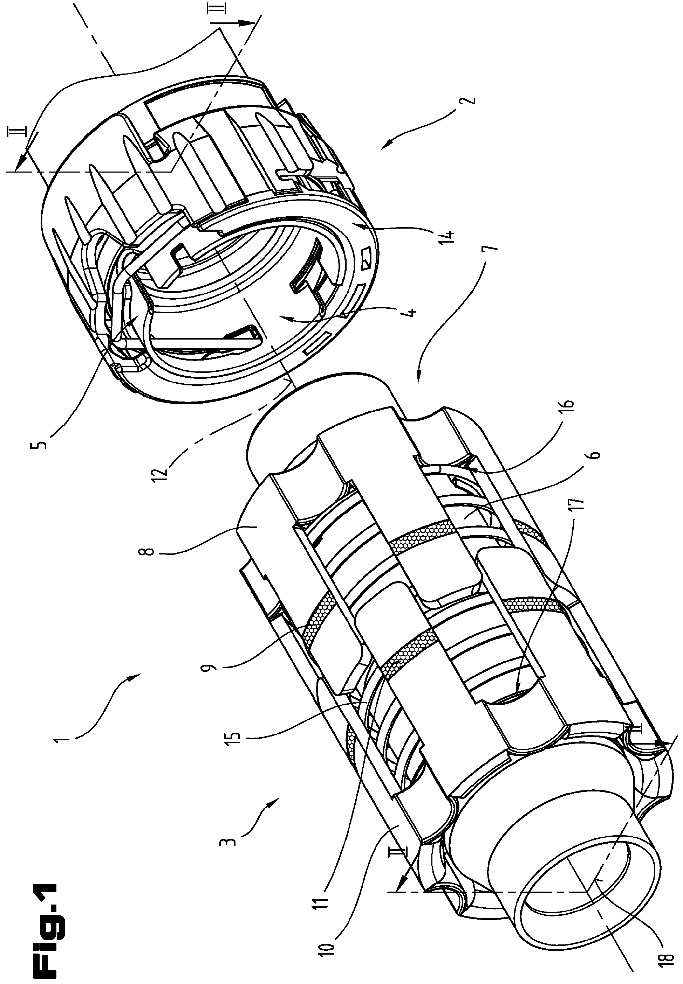

In der Fig. 1 ist eine perspektivische Ansicht einer ersten möglichen Ausgestaltungsform der Steckerbaugruppe 1 im Öffnungszustand dargestellt. Die Steckerbaugruppe 1 kann einen ersten Steckverbinder 2 und einen Gegensteckverbinder 3 umfassen. Der Steckverbinder 2 kann einen Aufnahmeraum 4 in einem ersten Mantelabschnitt 5 umfassen. Der Gegensteckverbinder 3 kann ein Verbindungsrohr 6 mit einem ersten Verbindungsabschnitt 7 umfassen. Wenn die Steckerbaugruppe 1 zusammengebaut ist, kann der erste Verbindungsabschnitt 7 im Aufnahmeraum 4 positioniert sein. Der Gegensteckverbinder 3 kann weiters ein erstes Anzeigeelement 8 mit einer Positionsmarkierung 9 und ein zweites Anzeigeelement 10 mit einer Lagemarkierung 11 umfassen. Das erste Anzeigeelement 8 kann zwischen einer Ruhestellung und eine Anzeigestellung in Achsrichtung entlang einer Mittelachse 12 verlagert werden.

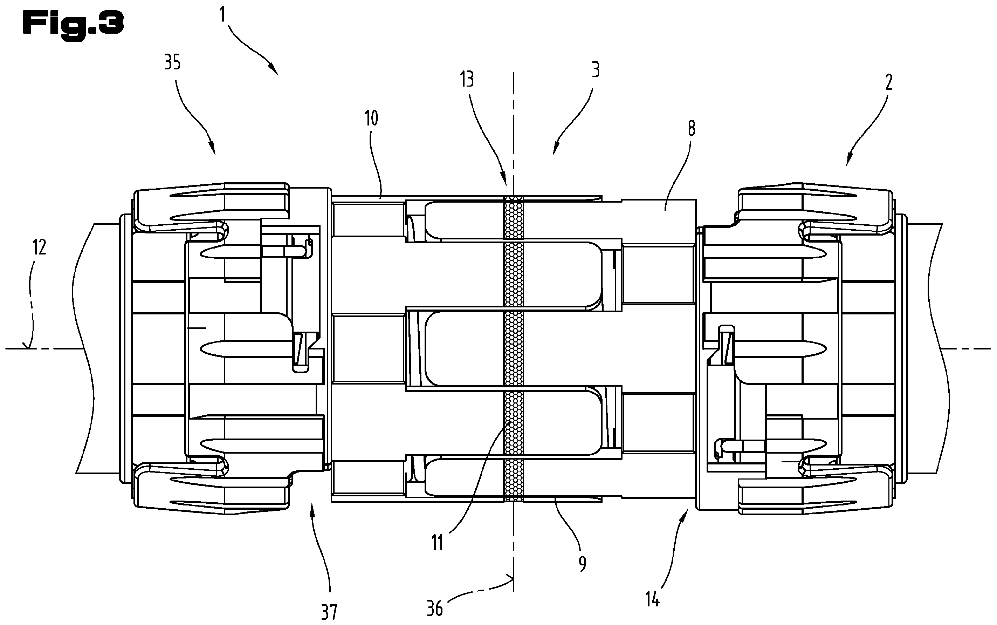

In Fig. 1 ist das erste Anzeigeelement 8 in dessen Ruhestellung dargestellt. Wird der erste Steckverbinder 2 mit dem Gegensteckverbinder 3 zusammengeführt und verbunden, so wird das erste Anzeigeelement 8 mittels einer Wandung 14 in Achsrichtung entlang der Mittelachse 12 von der Ruhestellung in die Anzeigestellung verlagert. Sind das erste Anzeigeelement 8 und das zweite Anzeigeelement 10 jeweils in die Anzeigestellung verlagert, bilden die Positionsmarkierung 9 und die Lagemarkierung 11 ein sich ergänzendes bzw. korrespondierendes Erscheinungsbild 13, welches beispielhaft in Fig. 3 dargestellt ist.

Der Gegensteckverbinder 3 kann weiters ein Federelement 15 umfassen. Das Federelement 15 kann derart angeordnet sein, dass es das Verbindungsrohr 6 umgreift und zwischen einer ersten Flanke 16 des ersten Anzeigeelementes 8 und einer zweiten Flanke 17 des zweiten Anzeigeelementes 10 positioniert ist. Mittels dem Federelement 15 ist das erste Anzeigeelement 8 somit in die Ruhestellung gedrängt.

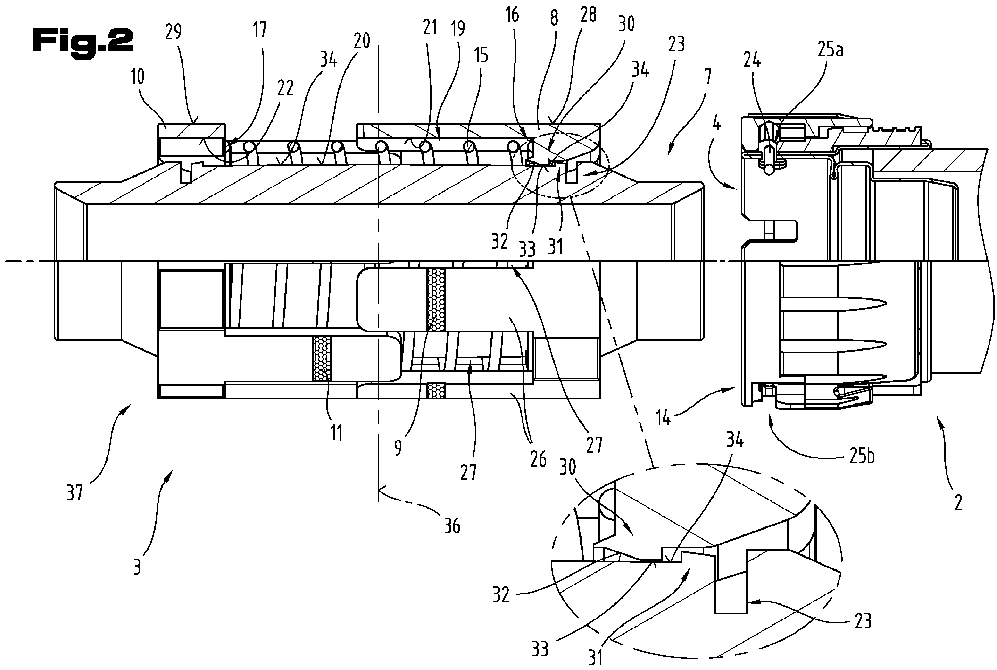

In der Fig. 2 ist die Steckerbaugruppe 1 in einer Schnittdarstellung entlang einer Schnittlinie 18, welche Schnittlinie 18 Fig. 1 entnommen werden kann, dargestellt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In Fig. 2 ist dargestellt, dass der Gegensteckverbinder 3 der Steckerbaugruppe 1 einen Ringraum 19 umfassen kann. Der Ringraum 19 wird radial innenliegend von einer Mantelfläche 20 des Verbindungsrohres 6 und radial außenliegend von einer ersten Innenumfangsfläche 21 des ersten Anzeigeelements 8 und von einer zweiten Innenumfangsfläche 22 des zweiten Anzeigeelements 10 begrenzt. Das Federelement 15 kann im Ringraum 19 angeordnet werden, wobei mittels des Federelementes 15 das erste Anzeigeelement 8 und das zweite Anzeigeelement 10 in Axialrichtung entlang der Mittelachse 12 voneinander distanziert gehalten werden. Das Federelement 15 drängt das erste Anzeigeelement 8 mittels der ersten Flanke 16 und das zweite Anzeigeelement 10 mittels der zweiten Flanke 17 in deren jeweilige Ruhestellung. Ist die Steckerbaugruppe 1 in eingestecktem Zustand, kann das erste Anzeigeelement 8 mittels der Wandung 14 entgegen der Federkraft des Federelements 15 in der Anzeigestellung gehalten werden.

Weiters kann der Gegensteckverbinder 3 eine erste Sicherungsnut 23 im Verbindungsrohr 6 umfassen. Im ersten Mantelabschnitt 5 des Steckverbinders 2 können zwei Durchtrittsöffnungen 25a, 25b vorgesehen sein. Der Steckverbinder 2 kann ein Arretierungselement 24, welches Arretierungselement 24 in den Durchtrittsöffnungen 25a, 25b zumindest teilweise positioniert ist, umfassen. In einer Schließposition des ersten Steckverbinders 2 ist der erste Verbindungsabschnitt 7 im Aufnahmeraum 4 positioniert, wobei das Arretierungselement 24 durch die Durchtrittsöffnungen 25a, 25b im ersten Mantelabschnitt 5 in die Sicherungsnut 23 eingreift. Damit ist im gesteckten Zustand der Steckerbaugruppe 1 der Steckverbinder 2 gegenüber dem Gegensteckverbinder 3 in Axialrichtung entlang der Mittelachse 12 gesichert.

Das erste Anzeigeelement 8 und das zweite Anzeigeelement 10 können als zumindest abschnittsweise formkomplementäre Klauen-Kupplungshälften ausgebildet sein. In der gezeigten Ausgestaltungsform sind das erste Anzeigeelemente 8 und das zweite Anzeigeelement 10 baugleich. Die Anzeigeelemente 8, 10 weisen jeweils zumindest drei Klauen 26 auf, wobei zwischen den Klauen 26 Ausnehmungen 27 ausgebildet sind.

Die Anzeigeelemente 8 und 10 können derart ausgebildet sein, dass die jeweiligen Seiten mit den Klauen 26 im eingebauten Zustand der Anzeigeelemente 8, 10 auch in Ruhestellung ineinandergreifen. An der ersten Umfangsfläche 28 des ersten Anzeigeelements 8, insbesondere im Bereich der Klauen 26 des ersten Anzeigeelements 8, ist die Positionsmarkierung 9 umlaufend ausgebildet.

An der zweiten Umfangsfläche 29 des zweiten Anzeigeelements 10, insbesondere im Bereich der Klauen 26 des zweiten Anzeigeelements 10, ist die Lagemarkierung 11 umlaufend ausgebildet.

Somit ergibt sich im zusammengesteckten Zustand der Steckerbaugruppe 1 ein umlaufendes korrespondierendes Erscheinungsbild 13, insbesondere wie aus Fig. 2 ersichtlich, ein durchgehender Strich. Es ist denkbar, dass das Erscheinungsbild 13 von einer sich entlang in Umfangsrichtung wiederholenden maschinenlesbaren Codierung gebildet ist. Beispielsweise ist es denkbar, dass mehrere QR-Codes im zusammengesteckten Zustand der Steckerbaugruppe 1 am Umfang verteilt sichtbar sind.

Wie in der Detailansicht in Fig. 2 dargestellt, kann das erste Anzeigeelement 8 ein erstes Anschlagelement 30 umfassen. Am Verbindungsrohr 6 des Gegensteckverbinders 3 kann ein erstes Gegenanschlagelement 31 ausgebildet sein. Wird das erste Anzeigeelement 8 mittels dem Federelement 15 axial in Richtung des ersten Verbindungsabschnitts 7 in die Ruhestellung gedrängt, sind das erste Anschlagelement 30 und das erste Gegenanschlagelement 31 in Berührung. Somit kann verhindert werden, dass das erste Anzeigeelement 8 axial in Richtung des ersten Verbindungsabschnitts 7 über die Ruhestellung hinaus verlagert werden kann.

Weiters kann am ersten Anschlagelement 30 eine Schrägfläche 32 ausgebildet sein. Die Schrägfläche 32 ist von einer Abschrägung des ersten Anschlagelements 30 in Richtung entgegen des ersten Verbindungsabschnitts 7 gebildet. Durch die Schrägfläche 32 bzw. durch die Abschrägung des ersten Anschlagelements 30 kann das erste Anzeigeelement 8 beim Zusammenbau des Gegensteckverbinders 3 in Richtung entgegen des ersten Verbindungsabschnitts 7 über das erste Gegenanschlagelement 31 geschoben werden, um in der Ruheposition positioniert werden zu können.

Weiters kann am ersten Anschlagelement 30 eine Gleitfläche 33 ausgebildet sein. Mittels der Gleitfläche 33 ist das erste Anzeigeelement 8 auf einer Außenumfangsfläche 34 des Verbindungsrohres 6 gelagert.

In der Fig. 3 ist eine perspektivische Ansicht der Steckerbaugruppe 1 im Schließzustand dargestellt, wobei wiederum für gleiche Teile gleiche Bezugszeichen bzw. Bauteilbezeichnungen wie in den vorangegangenen Fig. 1 und Fig. 2 verwendet werden. Um unnötige Wiederholungen zu vermeiden, wird auf die detaillierte Beschreibung in den vorangegangenen Fig. 1 und Fig. 2 hingewiesen bzw. Bezug genommen.

Fig. 3 zeigt die Steckerbaugruppe 1 im Schließzustand, wobei das erste Anzeigeelement 8 und das zweite Anzeigeelement 10 in die Anzeigestellung verlagert sind und die Positionsmarkierung 9 des ersten Anzeigeelementes 8 mit der Lagemarkierung 11 des zweiten Anzeigeelementes 10 ein sich ergänzendes bzw. korrespondierendes Erscheinungsbild 13 ergeben bzw. ausbilden. Das Erscheinungsbild 13 kann eine maschinenlesbare Codierung wie beispielsweise ein QR-Code, ein Strichcode oder ein 3D-Code sein. Befindet sich das erste Anzeigeelement 8 nicht in der Anzeigeposition, so bilden die Positionsmarkierung 9 und die Lagemarkierung 11 kein sich ergänzendes Erscheinungsbild 13 und die maschinenlesbare Codierung ist maschinell nicht auslesbar.

Wie bereits erwähnt, kann bei dieser Ausgestaltungsform der Steckerbaugruppe 1 das zweite Anzeigeelement 10 baugleich zum ersten Anzeigeelement 8 sein. Damit umfasst das zweite Anzeigeelement 10 alle zuvor genannten baulichen Merkmale des ersten Anzeigeelements 8. Das zweite Anzeigeelement 10 kann dabei gespiegelt zu einer Mittelebene 36, welche normal zur Mittelachse 12 ausgerichtet ist, am Verbindungsrohr 6 angeordnet sein. Gleichermaßen kann das Verbindungsrohr 6 des Gegensteckverbinders 3 symmetrisch bezüglich der Mittelebene 36 ausgebildet sein, sodass an einem zweiten Endbereich 37 des Gegensteckverbinders 3 ein zweiter Steckverbinder 35 aufgenommen bzw. eingesteckt werden kann.

Im Ausführungsbeispiel der Steckerbaugruppe 1 entsprechend der Figuren 1 bis 3 sind sowohl das erste Anzeigeelement 8, als auch das zweite Anzeigeelement 10 in Axialrichtung verlagerbar. Das korrespondierende Erscheinungsbild der Anzeigeelemente 8, 10 ergibt sich bei diesem Ausführungsbeispiel nur, wenn der erste Steckverbinder 2 und der zweite Steckverbinder 35 korrekt mit dem Gegensteckverbinder 3 gesteckt sind.

In einem weiteren, nicht dargestellten, Ausführungsbeispiel kann vorgesehen sein, dass der Gegensteckverbinder 3 nur zum Verbinden mit dem ersten Steckverbinder 2 ausgebildet ist. Hierbei kann vorgesehen sein, dass das zweite Anzeigeelement 10 starr und unverschieblich mit dem Gegensteckverbinder 3 gekoppelt ist. Hierbei ist lediglich das erste Anzeigeelement 8 in Axialrichtung verschiebbar, wobei sich korrespondierende Erscheinungsbild der Anzeigeelemente 8, 10 ergibt, wenn der erste Steckverbinder 2 korrekt mit dem Gegensteckverbinder 3 gesteckt ist.

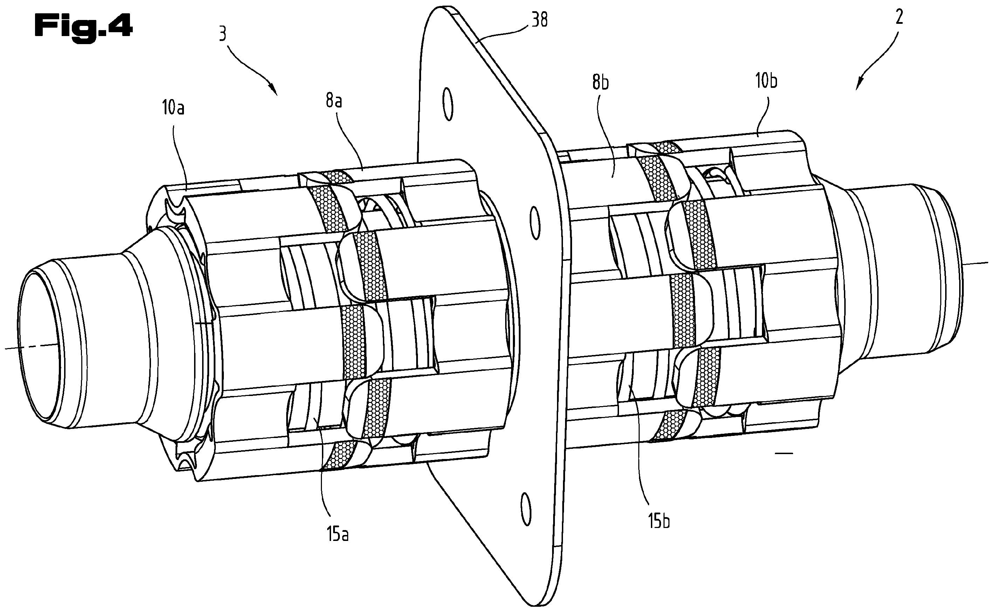

Fig. 4 zeigt eine perspektivische Ansicht einer zweiten mögliche Ausgestaltungsform der Steckerbaugruppe 1 im Öffnungszustand. Die Steckerbaugruppe 1 kann dabei zwei erste Anzeigeelemente 8a und 8b sowie zwei zweite Anzeigeelemente 10a und 10b umfassen. Weiters kann die Steckerbaugruppe 1 ein zwei Federelemente 15a und 15b und eine Flanschplatte 38 umfassen. Die Flanschplatte 38 kann beispielsweise zur Montage des Gegensteckverbinders 3 an einer Wand, insbesondere einer Wand in einem Flugzeug oder Fahrzeug, verwendet werden, wobei die Steckerbaugruppe 1 zum Verbinden von Leitungen vor und hinter der Wand verwendet werden kann. Ein derart ausgebildeter Gegensteckverbinder 3 kann als Wanddurchführung bezeichnet werden. Bei dieser zweiten möglichen Ausgestaltungsform der Steckerbaugruppe 1 ist die Möglichkeit geschaffen, dass das erste Anzeigeelemente 8a mit dem zweite Anzeigeelemente 10a in deren Anzeigestellung verlagert wird, wobei gleichzeitig das erste Anzeigeelemente 8b mit dem zweite Anzeigeelemente 10b in der Ruhestellung verharrt und vice versa. Somit ist auf beiden Seiten der Flanschplatte 38 eine Anzeige des Zustands der Steckerbaugruppe 1 ermöglicht.

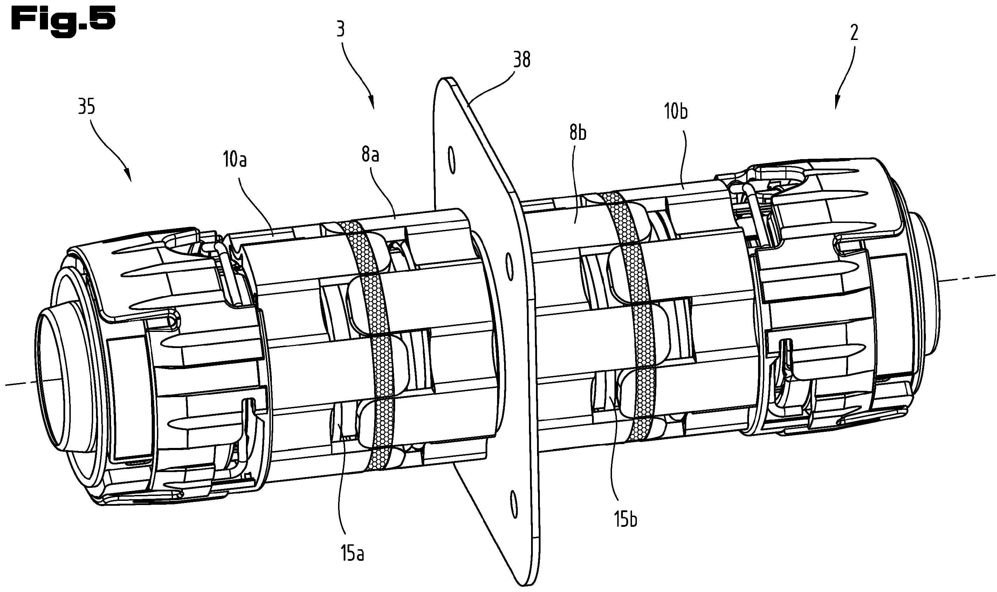

Fig. 5 zeigt die zweite mögliche Ausgestaltungsform der Steckerbaugruppe 1, wie mithilfe Fig. 4 beschrieben, im Schließzustand.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steckerbaugruppe | 28 | Umfangsfläche des ersten Anzeigeelements |
| 2 | erster Steckverbinder | | |
| 3 | Gegensteckverbinder | 29 | Umfangsfläche des zweiten Anzeigeelements |
| 4 | Aufnahmeraum | | |
| 5 | erster Mantelabschnitt | 30 | erstes Anschlagelement |
| 6 | Verbindungsrohr | 31 | erstes Gegenanschlagelement |
| 7 | erster Verbindungsabschnitt | 32 | Schrägfläche |
| 8 | erstes Anzeigeelement | 33 | Gleitfläche |
| 9 | Positionsmarkierung | 34 | Außenumfangsfläche |
| 10 | zweites Anzeigeelement | 35 | zweiter Steckverbinder |
| 11 | Lagemarkierung | 36 | Mittelebene |
| 12 | Mittelachse | 37 | zweiter Endbereich des Gegensteckverbinders |
| 13 | Erscheinungsbild | | |
| 14 | Wandung | 38 | Flanschplatte |
| 15 | Federelement | | |
| 16 | erste Flanke | | |
| 17 | zweite Flanke | | |
| 18 | Schnittlinie | | |
| 19 | Ringraum | | |
| 20 | Mantelfläche des Verbindungsrohres | | |
| 21 | erste Innenumfangsfläche | | |
| 22 | zweite Innenumfangsfläche | | |
| 23 | erste Sicherungsnut | | |
| 24 | Arretierungselement | | |
| 25 | Durchtrittsöffnung | | |
| 26 | Klauen | | |
| 27 | Ausnehmungen | | |

## Patentansprüche

1. Steckerbaugruppe (1) zum Verbinden von Leitungen für flüssige oder gasförmige Medien, umfassend
- einen ersten Steckverbinder (2) mit einem Aufnahmeraum (4) in einem ersten Mantelabschnitt (5);
- einen Gegensteckverbinder (3), der Gegensteckverbinder (3) umfassend ein Verbindungsrohr (6) mit einem ersten Verbindungsabschnitt (7), wobei der erste Verbindungsabschnitt (7) im gesteckten Zustand der Steckerbaugruppe (1) im Aufnahmeraum (4) des ersten Steckverbinders (2) aufgenommen ist,
wobei der Gegensteckverbinder (3) ein erstes Anzeigeelement (8) mit einer Positionsmarkierung (9) und ein zweites Anzeigeelement (10) mit einer Lagemarkierung (11) umfasst, wobei das erste Anzeigeelement (8) in Axialrichtung entlang einer Mittelachse (12) der Steckerbaugruppe (1) zwischen einer Ruhestellung und einer Anzeigestellung verlagerbar ist,
- wobei in der Anzeigestellung des ersten Anzeigeelementes (8), die Positionsmarkierung (9) und die Lagemarkierung (11) ein sich ergänzendes bzw. korrespondierendes Erscheinungsbild (13) ausbilden, wobei das erste Anzeigeelement (8) im gesteckten Zustand der Steckerbaugruppe (1) vom ersten Steckverbinder (2) in seine Anzeigestellung gedrängt ist,
- oder wobei bei einem in der Anzeigestellung befindlichen ersten Anzeigeelement (8) und gleichzeitig in einer Anzeigestellung befindlichen zweiten Anzeigeelement (10), die Positionsmarkierung (9) und die Lagemarkierung (11) ein sich ergänzendes bzw. korrespondierendes Erscheinungsbild (13) ausbilden, wobei das erste Anzeigeelement (8) im gesteckten Zustand der Steckerbaugruppe (1) vom ersten Steckverbinder (2) in seine Anzeigestellung gedrängt ist,
**dadurch gekennzeichnet, dass**
die Positionsmarkierung (9) an einer ersten Umfangsfläche (28) des ersten Anzeigeelements (8) umlaufend ausgebildet ist und von Ausnehmungen (27) unterbrochen ist, und dass die Lagemarkierung (11) an einer zweiten Umfangsfläche (29) des zweiten Anzeigeelements (10) umlaufend ausgebildet ist und von Ausnehmungen (27) unterbrochen ist, wobei in der Anzeigestellung des ersten Steckverbinders (2) die Positionsmarkierung (9) und die Lagemarkierung (11) ein umlaufendes sich ergänzendes bzw. korrespondierendes Erscheinungsbild (13) ausbilden.

2. Steckerbaugruppe (1) nach Anspruch 1, **dadurch gekennzeichnet, dass** der Gegensteckverbinder (3) ein Federelement (15) umfasst, wobei das erste Anzeigeelement (8) mittels des Federelementes (15) in Richtung der Ruhestellung gedrängt ist.

3. Steckerbaugruppe (1) nach Anspruch 2, **dadurch gekennzeichnet, dass** am Gegensteckverbinder (3) ein Ringraum (19) ausgebildet ist, wobei der Ringraum (19) radial innenliegend von einer Mantelfläche (20) des Verbindungsrohres (6) begrenzt wird und radial außenliegend von einer ersten Innenumfangsfläche (21) des ersten Anzeigeelements (8) und von einer zweiten Innenumfangsfläche (22) des zweiten Anzeigeelements (10) begrenzt wird, wobei in dem Ringraum (19) das Federelement (15) positioniert ist, mittels welchem das erste Anzeigeelement (8) und das zweite Anzeigeelement (10) in Axialrichtung entlang der Mittelachse (12) voneinander distanziert sind.

4. Steckerbaugruppe (1) nach einem der vorhergehenden Ansprüche, **dadurch gekennzeichnet, dass** der Gegensteckverbinder (3) eine erste Sicherungsnut (23) im Verbindungsrohr (6) aufweist, und dass der Steckverbinder (2) ein Arretierungselement (24) umfasst und im ersten Mantelabschnitt (5) zwei Durchtrittsöffnungen (25) ausgebildet sind, wobei das Arretierungselement (24) zum Sichern des ersten Steckverbinders (2) relativ zum Gegensteckverbinder (3) mit der zumindest einen ersten Sicherungsnut (23) vorgesehen ist, wobei die Durchtrittsöffnungen (25) zur Aufnahme des Arretierungselements (24) ausgebildet sind, und wobei das Arretierungselement (24) zwischen einer Arretierposition und einer Einsteckposition verlagerbar ist, wobei in einer Schließposition des ersten Steckverbinders (2) der erste Verbindungsabschnitt (7) im Aufnahmeraum (4) positioniert ist und das Arretierungselement (24) in die Arretierposition verlagert ist.

5. Steckerbaugruppe (1) nach Anspruch 4, **dadurch gekennzeichnet, dass** der erste Steckverbinder (2) eine stirnseitige Wandung (14) aufweist, wobei mittels der stirnseitigen Wandung (14) das erste Anzeigeelement (8) in Axialrichtung entlang der Mittelachse (12) in die Anzeigestellung verlagert ist, wenn der erste Steckverbinder (2) in der Schließposition ist, wobei die stirnseitige Wandung (14) am ersten Anzeigeelements (8) anliegt.

6. Steckerbaugruppe (1) nach einem der vorhergehenden Ansprüche, **dadurch gekennzeichnet, dass** das erste Anzeigeelement (8) und das zweite Anzeigeelement (10) als abschnittsweise formkomplementäre Klauen-Kupplungshälften ausgebildet sind, wobei das erste Anzeigeelement (8) über seinen Umfang verteilte Klauen (26) aufweist, welche in einem Abstand zueinander angeordnet sind, wobei zwischen den Klauen (26) Ausnehmungen (27) ausgebildet sind, wobei das erste Anzeigeelement (8) und das zweite Anzeigeelement (10) teilweise ineinandergreifend ausgebildet sind, wenn das erste Anzeigeelement (8) in der Ruhestellung positioniert ist.

7. Steckerbaugruppe (1) nach einem der vorhergehenden Ansprüche, **dadurch gekennzeichnet, dass** das korrespondierende Erscheinungsbild (13) eine maschinenlesbare Codierung ist, wobei die maschinenlesbare Codierung nur auslesbar ist, wenn das erste Anzeigeelement (8) in die Anzeigeposition verlagert ist.

8. Steckerbaugruppe (1) nach einem der vorhergehenden Ansprüche, **dadurch gekennzeichnet, dass** das erste Anzeigeelement (8) ein radial innenliegendes erstes Anschlagelement (30) aufweist, und dass das Verbindungsrohr (6) ein radial außenliegendes erstes Gegenanschlagelement (31) aufweist, wobei die axiale Bewegungsfreiheit des ersten Anzeigeelements (8) mittels des ersten Anschlagelementes (30) begrenzt ist, wobei in der Ruhestellung des ersten Anzeigeelementes (8) das erste Anschlagelement (30) am ersten Gegenanschlagelement (31) anliegt.

9. Steckerbaugruppe (1) nach Anspruch 8, **dadurch gekennzeichnet, dass** das erste Anschlagelement (30) auf der dem ersten Verbindungsabschnitt (7) abgewandten Seite eine erste Schrägfläche (32) aufweist.

10. Steckerbaugruppe (1) nach Anspruch 8, **dadurch gekennzeichnet, dass** das erste Anschlagelement (30) eine radial innenliegende erste Gleitfläche (33) aufweist, wobei das erste Anzeigeelement (8) mittels der ersten Gleitfläche (33) axial verschiebbar auf einer Außenumfangsfläche (34) des Verbindungsrohres (6) gelagert ist.

11. Steckerbaugruppe (1) nach einem der vorhergehenden Ansprüche, **dadurch gekennzeichnet, dass** die Steckerbaugruppe (1) einen zweiten Steckverbinder (35) umfasst, welcher zweite Steckverbinder (35) baugleich zum ersten Steckverbinder (2) ausgebildet ist, wobei das zweite Anzeigeelement (10) in Axialrichtung entlang einer Mittelachse (12) der Steckerbaugruppe (1) zwischen einer Ruhestellung und einer Anzeigestellung verlagerbar ist, wobei in der Anzeigestellung des ersten Anzeigeelements (8) die Positionsmarkierung (9) und die Lagemarkierung (11) ein sich ergänzendes bzw. korrespondierendes Erscheinungsbild (13) ausbilden, wobei das erste Anzeigeelement (8) und das zweite Anzeigeelement (10) im gesteckten Zustand der Steckerbaugruppe (1) vom ersten Steckverbinder (2) in die jeweilige Anzeigestellung gedrängt sind.

12. Steckerbaugruppe (1) nach einem der vorhergehenden Ansprüche, **dadurch gekennzeichnet, dass** am Gegensteckverbinder (3) eine Codierung ausgebildet ist und dass das erste Anzeigeelement (8) derart ausgebildet ist, dass bei einem in der Anzeigestellung befindlichen ersten Anzeigeelement (8) die Codierung von außen sichtbar ist und dass bei einem in der Ruhestellung befindlichen ersten Anzeigeelement (8) die Codierung durch das erste Anzeigeelement (8) verdeckt ist.

## Claims

1. A plug assembly (1) for connecting pipes for liquid or gaseous media, comprising
- a first plug connector (2) with a receiving space (4) in a first casing section (5);
- a mating plug connector (3), the mating plug connector (3) comprising a connecting tube (6) with a first connection section (7), wherein the first connection section (7) is received in the receiving space (4) of the first plug connector (2) in the plugged-in state of the plug assembly (1),
wherein the mating plug connector (3) comprises a first indicator element (8) with a position marking (9) and a second indicator element (10) with a location marking (11), wherein the first indicator element (8) can be displaced in the axial direction along a central axis (12) of the plug assembly (1) between a rest position and an indicator position,
- wherein in the indicator position of the first indicator element (8), the position marking (9) and the location marking (11) form a complementary and/or corresponding appearance (13), wherein the first indicator element (8) is urged into its indicator position by the first plug connector (2) in the plugged-in state of the plug assembly (1),
- or wherein, in the case of the first indicator element (8) located in the indicator position and the second indicator element (10) simultaneously located in an indicator position, the position marking (9) and the location marking (11) form a complementary and/or corresponding appearance (13), wherein the first indicator element (8) is urged into its indicator position by the first plug connector (2) in the plugged-in state of the plug assembly (1),
**characterized in that**
the position marking (9) is formed circumferentially on a first circumferential surface (28) of the first indicator element (8) and is interrupted by recesses (27), and that the location marking (11) is formed circumferentially on a second circumferential surface (29) of the second indicator element (10) and is interrupted by recesses (27), wherein, in the indicator position of the first plug connector (2), the position marking (9) and the location marking (11) have a circumferentially complementary and/or corresponding appearance (13).

2. The plug assembly (1) according to claim 1, **characterized in that** the mating plug connector (3) comprises a spring element (15), wherein the first indicator element (8) is urged in the direction of the rest position by means of the spring element (15).

3. The plug assembly (1) according to claim 2, **characterized in that** an annulus (19) is formed on the mating plug connector (3), wherein the annulus (19) is bounded radially on the inside by a casing surface (20) of the connecting tube (6) and is bounded radially on the outside by a first inner circumferential surface (21) of the first indicator element (8) and by a second inner circumferential surface (22) of the second indicator element (10), wherein the spring element (15), by means of which the first indicator element (8) and the second indicator element (10) are spaced apart from one another in the axial direction along the central axis (12), is positioned in the annulus (19).

4. The plug assembly (1) according to one of the preceding claims, **characterized in that** the mating plug connector (3) has a first securing groove (23) in the connecting tube (6), and that the plug connector (2) comprises a locking element (24) and two passages (25) are formed in the first casing section (5), wherein the locking element (24) is provided for securing the first plug connector (2) relative to the mating plug connector (3) with the at least one first securing groove (23), wherein the passages (25) are configured to receive the locking element (24), and wherein the locking element (24) can be displaced between a locking position and an insertion position, wherein in a closed position of the first plug connector (2) the first connection section (7) is positioned in the receiving space (4) and the locking element (24) is displaced into the locking position.

5. The plug assembly (1) according to claim 4, **characterized in that** the first plug connector (2) has an end-face wall (14), wherein the first indicator element (8) is displaced in the axial direction along the central axis (12) into the indicator position by means of the end-face wall (14) when the first plug connector (2) is in the closed position, wherein the end-face wall (14) rests against the first indicator element (8).

6. The plug assembly (1) according to one of the preceding claims, **characterized in that** the first indicator element (8) and the second indicator element (10) are configured as claw-coupling halves being complementary in shape in some sections, wherein the first indicator element (8) has claws (26) distributed over its circumference, which are arranged at a distance from one another, wherein recesses (27) are formed between the claws (26), wherein the first indicator element (8) and the second indicator element (10) are configured to partially engage with one another when the first indicator element (8) is placed in the rest position.

7. The plug assembly (1) according to one of the preceding claims, **characterized in that** the corresponding appearance (13) is a machine-readable coding, wherein the machine-readable coding is readable only when the first indicator element (8) is displaced into the indicator position.

8. The plug assembly (1) according to one of the preceding claims, **characterized in that** the first indicator element (8) has a radially inner first stop element (30), and that the connecting tube (6) has a radially outer first counter-stop element (31), wherein the axial freedom of movement of the first indicator element (8) is limited by means of the first stop element (30), wherein the first stop element (30) rests against the first counter-stop element (31) in the rest position of the first indicator element (8).

9. The plug assembly (1) according to claim 8, **characterized in that** the first stop element (30) has a first inclined surface (32) on the side facing away from the first connection section (7).

10. The plug assembly (1) according to claim 8, **characterized in that** the first stop element (30) has a radially inner first sliding surface (33), wherein the first indicator element (8) is mounted to be axially displaceable on an outer circumferential surface (34) of the connecting tube (6) by means of the first sliding surface (33).

11. The plug assembly (1) according to one of the preceding claims, **characterized in that** the plug assembly (1) comprises a second plug connector (35), which second plug connector (35) is of identical design to the first plug connector (2), wherein the second indicator element (10) is displaceable in the axial direction along a central axis (12) of the plug assembly (1) between a rest position and an indicator position, wherein in the indicator position of the first indicator element (8) the position marking (9) and the location marking (11) have a complementary and/or corresponding appearance (13), wherein the first indicator element (8) and the second indicator element (10) are urged into the respective indicator position by the first plug connector (2) in the plugged-in state of the plug assembly (1).

12. The plug assembly (1) according to one of the preceding claims, **characterized in that** a coding is formed on the mating plug connector (3) and that the first indicator element (8) is configured such that, when the first indicator element (8) is in the indicator position, the coding is visible from the outside and that, when the first indicator element (8) is in the rest position, the coding is covered by the first indicator element (8).

## Revendications

1. Ensemble bouchon (1) pour raccorder des conduites pour des milieux liquides ou gazeux, comprenant
- un premier raccord enfichable (2) comprenant une chambre de réception (4) dans une première partie de gaine (5) ;
- un raccord enfichable homologue (3), le raccord enfichable homologue (3) comprenant un tube de raccordement (6) avec une première section de raccordement (7), dans lequel la première section de raccordement (7) est logée dans la chambre de réception (4) du premier raccord enfichable (2) lorsque l'ensemble bouchon (1) est enfiché,
dans lequel le raccord enfichable homologue (3) comprend un premier élément d'affichage (8) avec un repère de position (9) et un second élément d'affichage (10) avec un repère d'emplacement (11), dans lequel le premier élément d'affichage (8) peut être déplacé entre une position de repos et une position d'affichage dans la direction axiale le long d'un axe central (12) de l'ensemble bouchon (1),
- dans lequel dans la position d'affichage du premier élément d'affichage (8), le repère de position (9) et le repère d'emplacement (11) forment une image complémentaire ou correspondante (13), dans lequel le premier élément d'affichage (8) est poussé dans sa position d'affichage par le premier raccord enfichable (2) lorsque l'ensemble bouchon (1) est enfiché,
- ou dans lequel, dans le cas d'un premier élément d'affichage (8) en position d'affichage et en même temps d'un second élément d'affichage (10) en position d'affichage, le repère de position (9) et le repère d'emplacement (11) forment une image complémentaire ou correspondante (13), dans lequel le premier élément d'affichage (8) est poussé dans la position d'affichage du premier élément d'affichage au moyen du premier raccord enfichable (2) lorsque l'ensemble bouchon (1) est enfiché,
**caractérisé en ce que**
le repère de position (9) est formé de manière périphérique sur une première surface périphérique (28) du premier élément d'affichage (8) et est interrompu par des évidements (27), et **en ce que** le repère d'emplacement (11) est formé de manière périphérique sur une seconde surface périphérique (29) du second élément d'affichage (10) et est interrompu par des évidements (27), dans lequel le repère de position (9) et le repère d'emplacement (11) forment une apparence périphérique complémentaire ou correspondante (13) dans la position d'affichage du premier raccord enfichable (2).

2. Ensemble bouchon (1) selon la revendication 1, **caractérisé en ce que** le raccord enfichable homologue (3) comprend un élément à ressort (15), dans lequel le premier élément d'affichage (8) est poussé au moyen de l'élément à ressort (15) en direction de la position de repos.

3. Ensemble bouchon (1) selon la revendication 2, **caractérisé en ce qu'**un espace annulaire (19) est formé au niveau du raccord enfichable homologue (3), dans lequel l'espace annulaire (19) est délimité radialement à l'intérieur par une surface de gaine (20) du tube de raccordement (6) et est délimité radialement à l'extérieur par une première surface périphérique intérieure (21) du premier élément d'affichage (8) et par une seconde surface périphérique intérieure (22) du second élément d'affichage (10), dans lequel l'élément à ressort (15) est positionné dans l'espace annulaire (19), au moyen duquel le premier élément d'affichage (8) et le second élément d'affichage (10) sont espacés l'un de l'autre dans la direction axiale le long de l'axe central (12).

4. Ensemble bouchon (1) selon l'une quelconque des revendications précédentes, **caractérisé en ce que** le raccord enfichable homologue (3) présente une première rainure de sécurité (23) dans le tube de raccordement (6), et **en ce que** le raccord enfichable (2) comprend un élément de verrouillage (24) et deux ouvertures de passage (25) sont formées dans la première section de gaine (5), dans lequel l'élément de verrouillage (24) est prévu pour fixer le premier raccord enfichable (2) par rapport au raccord enfichable homologue (3) avec la au moins une première rainure de sécurité (23), dans lequel les ouvertures de passage (25) sont formées pour recevoir l'élément de verrouillage (24), et dans lequel l'élément de verrouillage (24) peut être déplacé entre une position de verrouillage et une position d'insertion, dans lequel, dans une position de fermeture du premier raccord enfichable (2), la première section de raccordement (7) est positionnée dans la chambre de réception (4) et l'élément de verrouillage (24) est déplacé dans la position de verrouillage.

5. Ensemble bouchon (1) selon la revendication 4, **caractérisé en ce que** le premier raccord enfichable (2) présente une paroi frontale (14), dans lequel le premier élément d'affichage (8) est déplacé dans la direction axiale le long de l'axe central (12) dans la position d'affichage au moyen de la paroi frontale (14) lorsque le premier raccord enfichable (2) est en position de fermeture, dans lequel la paroi frontale (14) se place contre le premier élément d'affichage (8).

6. Ensemble bouchon (1) selon l'une quelconque des revendications précédentes, **caractérisé en ce que** le premier élément d'affichage (8) et le second élément d'affichage (10) sont réalisés sous la forme de moitiés de couplage à griffes de forme complémentaire par sections, dans lequel le premier élément d'affichage (8) présentent des griffes (26) réparties sur sa périphérie, qui sont agencées à une certaine distance les unes des autres, dans lesquels des évidements (27) sont réalisés entre les griffes (26), dans lequel le premier élément d'affichage (8) et le second élément d'affichage (10) sont formés partiellement en prise l'un dans l'autre lorsque le premier élément d'affichage (8) est positionné dans la position de repos.

7. Ensemble bouchon (1) selon l'une quelconque des revendications précédentes, **caractérisé en ce que** l'apparence correspondante (13) est un codage lisible par machine, dans lequel le codage lisible par machine n'est lisible que lorsque le premier élément d'affichage (8) est déplacé dans la position d'affichage.

8. Ensemble bouchon (1) selon l'une quelconque des revendications précédentes, **caractérisé en ce que** le premier élément d'affichage (8) présente un premier élément de butée (30) situé radialement à l'intérieur, et **en ce que** le tube de raccordement (6) présente un premier élément de butée complémentaire (31) situé radialement à l'extérieur, dans lequel la liberté de mouvement axiale du premier élément d'affichage (8) est limitée au moyen du premier élément de butée (30), dans lequel le premier élément de butée (30) se place contre le premier élément de butée complémentaire (31) dans la position de repos du premier élément d'affichage (8).

9. Ensemble bouchon (1) selon la revendication 8, **caractérisé en ce que** le premier élément de butée (30) présente une première surface oblique (32) sur le côté opposé à la première section de raccordement (7).

10. Ensemble bouchon (1) selon la revendication 8, **caractérisé en ce que** le premier élément de butée (30) présente une première surface de glissement (33) située radialement à l'intérieur, dans lequel le premier élément d'affichage (8) est monté de manière à pouvoir être déplacé axialement au moyen de la première surface de glissement (33) sur une surface périphérique extérieure (34) du tube de raccordement (6).

11. Ensemble bouchon (1) selon l'une quelconque des revendications précédentes, **caractérisé en ce que** l'ensemble bouchon (1) comprend un second raccord enfichable (35), lequel second raccord enfichable (35) est réalisé de manière identique au premier raccord enfichable (2), dans lequel le second élément d'affichage (10) peut être déplacé dans la direction axiale le long d'un axe central (12) de l'ensemble bouchon (1) entre une position de repos et une position d'affichage, dans lequel, dans la position d'affichage du premier élément d'affichage (8), le repère de position (9) et le repère d'emplacement (11) forment une image complémentaire ou correspondante (13), dans lequel le premier élément d'affichage (8) et le second élément d'affichage (10) sont poussés par le premier raccord enfichable (2) dans la position d'affichage respective lorsque l'ensemble bouchon (1) est enfiché.

12. Ensemble bouchon (1) selon l'une des revendications précédentes, **caractérisé en ce qu'**un codage est formé sur le raccord enfichable homologue (3), et **en ce que** le premier élément d'affichage (8) est formé de manière à ce que dans le cas d'un premier élément d'affichage (8) se trouvant dans la position d'affichage, le codage soit visible de l'extérieur, et à ce que dans le cas d'un premier élément d'affichage (8) se trouvant dans la position de repos, le codage soit masqué par le premier élément d'affichage (8).
